# EUROPEAN PATENT APPLICATION

(11) **EP 2 207 132 A1**
(43) Date of publication of application: **14.07.2010**
(21) Application number: 09175324.4
(22) Date of filing: 06.11.2009
(51) Int. Cl.: G06K 19/07, G06Q 20/00

(54) **Card reader and mobile payment terminal**

(30) Priority: 30.12.2008 CN 200820235884 U
(71) Applicant: Shenzhen Netcom Electronics Co., Ltd., High Tech Park Shenzhen (CN)
(72) Inventor: Yang, Tianzhu, Shenzhen (CN); Li, Zhixiong, Shenzhen (CN)
(74) Representative: MERH-IP Matias Erny Reichl Hoffmann

(57) **Abstract**

The present invention discloses a card reader (11) and a mobile payment terminal. The card reader (11) comprises an MCU (112) which is connected to a single interface smart stage card (12) and is configured to read data from the single interface smart stage card (12) or write data in the single interface smart stage card (12); an NFC antenna (111) which is connected to the MCU (112) and is configured for performing data interchange between a contactless card reading terminal and the single interface smart stage card (12); and a DIU (113) which is connected to the MCU (112) and is configured to realize communication between the MCU (112) and a communication terminal. In this way, by installing an NFC antenna (111), the single interface smart stage card (12) in the card reader (11) can interchange data with a contactless card reading terminal wirelessly without connecting to the DIU (113).

## Description

### TECHNICAL FIELD

The present invention relates to card readers and, more particularly to a card reader and a mobile payment terminal.

### BACKGROUND

At present, card readers in the market mainly includes a single chip microcomputer (hereinafter referred to as "SCM"), a universal serial bus (hereinafter referred to as "USB") interface, and a near field communication (hereinafter referred to as "NFC") antenna. The traditional card readers can only read or write data from or in a dual interface smart stage card (a storage card embedded with a contactless smart card), and achieve data interchange with a contactless card reading terminal through the dual interface card to realize mobile payment, but can't realize mobile payment through a single interface smart stage card.

### SUMMARY

For solving the problems of the prior art mentioned above, a card reader according to claim 1 and a mobile payment terminal according to claim 7 are proposed. Preferred embodiments of the invention are described by the dependent claims.

In accordance with an aspect of the present invention, a card reader, which can realize mobile payment through a single interface smart stage card, is provided.

The card reader comprises a micro control unit (hereinafter referred to as "MCU"), an NFC antenna and a data interface unit (hereinafter referred to as "DIU"). The MCU is connected to a single interface smart stage card, for reading data from the single interface smart stage card or writing data in the single interface smart stage card. The NFC antenna is connected to the MCU for performing data interchange between a contactless card reading terminal and the single interface smart stage card.
The DIU is connected to the MCU for establishing communication between the MCU and a communication terminal.

In accordance with another aspect of the present invention, a mobile payment terminal is provided and comprises a card reader and a single interface smart stage card which is inserted and held in the card reader for storing data. The card reader comprises an MCU, an NFC antenna and a DIU. The MCU is connected to the single interface smart stage card, for reading data from the single interface smart stage card or writing data in the single interface smart stage card. The NFC antenna is connected to the MCU for performing data interchange between a contactless card reading terminal and the single interface smart stage card. The DIU is connected to the MCU for establishing communication between the MCU and a communication terminal.

Accordingly, by installing an NFC antenna in the card reader, the single interface smart stage card inserted in the card reader can interchange data with a contactless card reading terminal wirelessly without connecting to the DIU, thereby realizing mobile payment.

Other objects, advantages and novel features of the present invention will become more apparent from the following detailed description when taken in conjunction with the accompanying drawings.

### BRIEF DESCRIPTION OF THE DRAWINGS

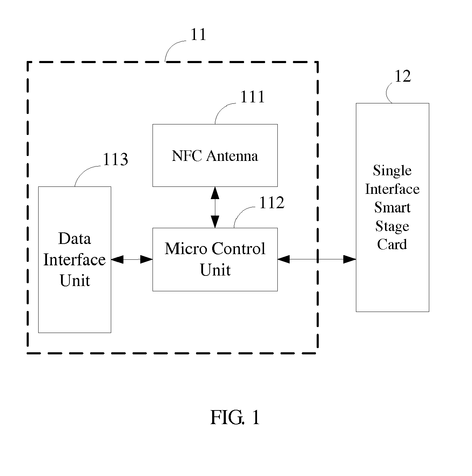

FIG. 1 is a functional block diagram of a mobile payment terminal in accordance with an embodiment of the present invention.

### DETAILED DESCRIPTION OF THE PREFERRED EMBODIMENTS

Many aspects of the card reader and the mobile payment terminal can be better understood with reference to the following drawings. The components in the drawings are not necessarily to scale, the emphasis instead being placed upon clearly illustrating the principles of the present thermal interface material. Moreover, in the drawings, like reference numerals designate corresponding parts throughout the several views.

In an embodiment of the present invention, by installing an NFC antenna in the card reader, the single interface smart stage card inserted in the card reader can interchange data with a contactless card reading terminal wirelessly without connecting to the DIU, thereby realizing mobile payment.

FIG. 1 shows a functional construction of a mobile payment terminal in accordance with an embodiment of the present invention. To facilitate description, only the parts related to the embodiment of the present invention are shown. The mobile payment terminal comprises a card reader 11 and a single interface smart stage card 12.

The card reader 11 comprises an NFC antenna 111, an MCU 112 and a DIU 113.

The NFC antenna 111 is configured for performing data interchange between the contactless card reading terminal and the single interface smart stage card 12. The NFC antenna 111 is connected to the MCU 112. The NFC antenna 111 is printed on a printed circuit board (PCB) of the card reader 11, or alternatively, is a separate antenna coil independent of a printed circuit board of the card reader. The operation frequency band of the NFC antenna 111 is advantageously about 13.56 MHz.

The MCU 112 is connected to the single interface smart stage card 12 and is configured to read data from the single interface smart stage card 12 or write data in the single interface smart stage card 12. In this embodiment, the MCU 112 is an SCM.

The DIU 113 is connected to the MCU 112 and, under the control of the MCU 112, interchanges data with a communication terminal provided with a data interface unit corresponding to the DIU 113 through the DIU 113. In this embodiment, the DIU 113 is a USB interface, and the communication terminal is a personal computer (PC).

The card reader 11 further comprises a socket for the single interface smart stage card. The socket is connected to the PCB of the card reader 11 and configured to hold the single interface smart stage card.

The exemplary working process is described as follows: the user inserts the single interface smart stage card 12 in the card reader 11; the mobile payment terminal is connected to the PC through the DIL1 113 and the mobile payment terminal serves as a standard USB mass storage device (MSD) on the PC.

The application program on the PC communicates with the MCU 112 of the mobile payment terminal through instructions in a small computer system interface (SCSI), for wired access to the single interface smart stage card 12 to charge the single interface smart stage card 12, etc., thereby eliminating the need to charge traditional transportation cards on specific chargers.

In the contactless operation mode, the MCU 112 judges whether the NFC antenna 111 enters the valid range of the contactless card reading terminal. If in the valid range, the NFC antenna 111 is activated by the contactless card reading terminal, and the contactless card reading terminal accesses the single interface smart stage card to finish the contactless transaction.

In the embodiment of the present invention, by installing an NFC antenna in the card reader, the single interface smart stage card inserted in the card reader can interchange data with a contactless card reading terminal wirelessly without connecting to the DIU, thereby realizing mobile payment.

It is believed that the present embodiments and their advantages will be understood from the foregoing description, and it will be apparent that various changes may be made thereto without departing from the spirit and scope of the invention or sacrificing all of its material advantages, the examples hereinbefore described merely being preferred or exemplary embodiments of the invention.

## Claims

1. A card reader comprising:
a micro control unit (112) connected to a single interface smart stage card (12), for reading data from the single interface smart stage card (12) or writing data in the single interface smart stage card (12);
an NFC antenna (111) connected to the micro control unit (112), for performing data interchange between a contactless card reading terminal and the single interface smart stage card (12); and
a data interface unit (113) connected to the micro control unit (112), for establishing communication between the micro control unit (112) and a communication terminal.

2. The card reader of claim 1, wherein the NFC antenna (111) is a separate antenna coil independent of a printed circuit board of the card reader (11).

3. The card reader of claim 1, wherein the NFC antenna (111) is an antenna coil printed on a printed circuit board of the card reader (11).

4. The card reader of at least one of claims 1-3, wherein the micro control unit (112) is a single chip microcomputer.

5. The card reader of at least one of claims 1-4, wherein the data interface unit (113) is a universal serial bus interface.

6. The card reader of at least one of claims 1-5, further comprising a socket for single interface smart stage card (12), the socket being connected to a printed circuit board of the card reader (11) for holding the single interface smart stage card (12).

7. A mobile payment terminal comprising:
a card reader (11);
wherein the card reader (11) is configured to receive a single interface smart stage card (12) which is configured to store data; and
the card reader (11) comprising:
a micro control unit (112) connected to the single interface smart stage card (12), for reading data from the single interface smart stage card (12) or writing data in the single interface smart stage card (12);
an NFC antenna (111) connected to the micro control unit (112), for performing data interchange between a contactless card reading terminal and the single interface smart stage card (12); and
a data interface unit (113) connected to the micro control unit (112), for establishing communication between the micro control unit (112) and a communication terminal.

8. The mobile payment terminal of claim 7, wherein the NFC antenna (111) is a separate antenna coil independent of a printed circuit board of the card reader.

9. The mobile payment terminal of claim 7, wherein the NFC antenna (111) is an antenna coil printed on a printed circuit board of the card reader.

10. The mobile payment terminal of at least one of claims 7-9, wherein the micro control unit (112) is a single chip microcomputer.

11. The mobile payment terminal of at least one of claims 7-10, wherein the data interface unit (113) is a universal serial bus interface (USB).

12. The mobile payment terminal of at least one of claims 7-11, further comprising a socket for the single interface smart stage card (12), the socket being connected to a printed circuit board of the card reader (11) for holding the single interface smart stage card (12).
